# EUROPÄISCHE PATENTSCHRIFT

(11) **EP 4 334 120 B1**
(45) Veröffentlichungstag und Bekanntmachung des Hinweises auf die Patenterteilung: **18.09.2024**
(21) Anmeldenummer: 22751336.3
(22) Anmeldetag: 13.07.2022
(51) Int. Cl.: B29C 64/40, B29C 64/10, B22F 10/38, B22F 10/47, B22F 10/85, B33Y 50/02, B33Y 10/00, B22F 10/20

(54) **HERSTELLUNGSVERFAHREN UND VERZUGSKOMPENSATOR ZUR ADDITIVEN BAUTEILFERTIGUNG**
PRODUCTION METHOD AND DISTORTION COMPENSATOR FOR ADDITIVE MANUFACTURING OF COMPONENTS
PROCÉDÉ DE PRODUCTION ET COMPENSATEUR DE DISTORSION POUR FABRICATION ADDITIVE DE COMPOSANTS

(30) Priorität: 16.07.2021 DE 102021118411
(43) Veröffentlichungstag der Anmeldung: 13.03.2024
(73) Patentinhaber: Autoflug GmbH, 25462 Rellingen (DE)
(72) Erfinder: SPINDLER, Claudius, 25485 Bilsen (DE)
(74) Vertreter: Feucker, Max Martin
(86) Internationale Anmeldenummer: PCT/EP2022/069597
(87) Internationale Veröffentlichungsnummer: WO 2023/285526

(56) Entgegenhaltungen:
- EP-A1- 2 910 362
- US-A1- 2019 079 491
- US-A1- 2020 108 441
- US-A1- 2020 171 701
- US-A1- 2020 307 107

## Beschreibung

Die vorliegende Erfindung betrifft ein Herstellungsverfahren zur Herstellung eines Bauteils, ein Bauteilsystem und ein computerimplementiertes Verfahren.

Bei additiven Fertigungsprozessen, insbesondere bei einem 3D-Druck, wird eine Vielzahl Materialschichten übereinandergeschichtet, um ein Bauteil zu formen. Dabei wird ein Rohmaterial, wie bspw. ein Kunststofffilament, erwärmt, um dieses bauteilspezifisch zu formen und anschließend abgekühlt.

Beim Abkühlen eines in einem additiven Fertigungsprozess hergestellten Bauteils kommt es aufgrund thermischer Prozesse im Inneren des Bauteils zu Schrumpfungen und, dadurch bedingt, zu Spannungen in dem Bauteil, die zu einer zumindest bereichsweisen Eigenbewegung des Bauteils, d.h. zu thermischem Verzug, führen können. Derartige Eigenbewegungen deformieren das Bauteil und können das Bauteil unbrauchbar machen.

Es sind Stützstrukturen bekannt, die in einem additiven Fertigungsprozess zusammen mit dem Bauteil gebildet und mit dem Bauteil stoffschlüssig verbunden werden, um eine Eigenbewegung des Bauteils zu minimieren. Eine solche stoffschlüssige Verbindung zwischen Bauteil und Stützstruktur muss nach dem Fertigungsprozess aufgebrochen werden, wobei die Stützstruktur und/oder das Bauteil beschädigt werden können. Entsprechend bestimmen Stützstrukturen in erheblichem Maße während und nach dem Fertigungsprozess durchzuführende Arbeitsschritte.

Ferner bewirken bekannte Stützstrukturen vorwiegend eine Abstützung eines Bauteils in z-Richtung bzw. in Richtung eines Aufbaus jeweiliger Schichten des Bauteils, so dass Verformungen bzw. Eigenbewegungen eines Bauteils in x-Richtung und y-Richtung, also seitlich zu einer Aufbaurichtung von Schichten des Bauteils, nicht oder nur gering durch ein Stützelement gemindert werden.

Das Dokument US 2019/079491 A1 offenbart ein Herstellungsverfahren, bei dem in einem additiven Fertigungsprozess ein Bauteil auf einem Substrat aufgeschichtet wird. Ein Verzugskompensator ist an dem Bauteil angeordnet und kann von diesem entfernt werden. Verzugskompensatoren können benutzt werden für überhängende und nicht überhängende Flächen des Objekts; damit werden die Flächen stabilisiert gegen eine thermische Verzerrung.

Die vorgestellte Erfindung dient zum Bereitstellen eines Bauteils in einem additiven Fertigungsprozess mit einer minimalen Fertigungstoleranz.

Es wird somit gemäß einem ersten Aspekt der vorgestellten Erfindung ein Herstellungsverfahren zur Herstellung eines Bauteils vorgestellt, das im Anspruch 1 definiert ist.

Unter einer lösbaren Anordnung eines Verzugskompensators an einem Bauteil ist im Kontext der vorgestellten Erfindung eine Anordnung zu verstehen, bei der der Verzugskompensator von dem Bauteil entfernt werden kann, ohne das Bauteil zu beschädigen. Eine lösbare Anordnung eines Verzugskompensators an einem Bauteil kann bspw. eine formschlüssige jedoch nicht stoffschlüssige Verbindung umfassen. Insbesondere kann eine lösbare Anordnung eines Verzugskompensators an einem Bauteil derart ausgestaltet sein, dass der Verzugskompensator beabstandet von dem Bauteil angeordnet ist, wobei ein Abstand zwischen Verzugskompensator und Bauteil derart gewählt ist, dass dieser bei minimal ist, jedoch ein Verschmelzen des Bauteils mit dem Verzugskompensator verhindert. Insbesondere ist der Abstand kleiner als eine Strecke, um die sich ein dem Verzugskompensator zugeordneter Bereich des Bauteils aufgrund einer durch thermischen Verzug bei einem additiven Fertigungsprozess des Bauteils auftretenden Eigenbewegung bewegt.

Insbesondere ist im Kontext der vorgestellten Erfindung unter einer x-Richtung eine Richtung entlang einer x-Achse, also einer waagerechte Abszissenachse, unter einer y-Richtung eine Richtung entlang einer vertikal auf der Abszissenachse stehenden, insbesondere senkrecht zu einem Substrat verlaufenden Ordinatenachse, und unter einer z-Richtung eine Richtung entlang einer Applikatenachse, also einer senkrecht zu der Abszissenachse und der Ordinatenachse verlaufenden Achse zu verstehen.

Die vorgestellte Erfindung basiert auf einem lösbar an einem Bauteil angeordneten Verzugskompensator. Selbstverständlich kann im Rahmen der vorgestellten Erfindung ein einzelner Verzugskompensator oder eine Vielzahl Verzugskompensatoren vorgesehen werden.

Der erfindungsgemäß vorgesehene Verzugskompensator blockiert eine in einem additiven Fertigungsprozess, wie bspw. einem 3D-Druck, aufgrund von thermischem Verzug auftretende Eigenbewegung von zumindest einem Bereich des Bauteils.

Der erfindungsgemäß vorgesehene Verzugskompensator kann zusammen mit einem jeweiligen Bauteil in einem additiven Fertigungsverfahren gebildet, insbesondere aufgeschichtet werden.

Insbesondere umfasst der Verzugskompensator Bereiche mit hoher Materialstärke in einer Richtung einer zu erwartenden Eigenbewegung des Bauteils, so dass einer aufgrund von thermischen Spannungen in dem Bauteil wirkenden Kraft, die zu der Eigenbewegung des Bauteils führt bzw. führen könnte, eine Gegenkraft bereitgestellt wird, die die Eigenbewegung des Bauteils blockiert. Dazu kann der Verzugskompensator derart ausgestaltet sein, dass dieser eine von dem Bauteil auf den Verzugskompensator wirkende Kraft in z-Richtung, in y-Richtung und/oder in x-Richtung ableitet, um eine Eigenbewegung des Bauteils in z-Richtung, in y-Richtung und/oder in x-Richtung zu verhindern bzw. zu minimieren. Um die erfindungsgemäß vorgesehene lösbare Anordnung des Verzugskompensators an dem Bauteil zu erreichen, wird der Verzugskompensator insbesondere formschlüssig, vorzugsweise beabstandet von dem Bauteil angeordnet. Dabei wird der Verzugskompensator jedoch derart relativ zu dem Bauteil angeordnet, dass dieser eine insbesondere bereichsweise Eigenbewegung des Bauteils aufgrund von thermischem Verzug blockiert. Dies bedeutet, dass der Verzugskompensator in einem Bereich angeordnet wird, in den sich das Bauteil möglicherweise bzw. erwartungsgemäß bewegen kann bzw. wird, so dass sich das Bauteil bei einer Eigenbewegung auf den Verzugskompensator bewegt bzw. den Verzugskompensator kontaktiert und eine die Eigenbewegung des Bauteils bewirkende Kraft in den Verzugskompensator abgeleitet wird. Entsprechend verhindert der Verzugskompensator eine zumindest bereichsweise Deformierung des Bauteils.

Für den Fall, dass der Verzugskompensator beabstandet von einem jeweiligen Bauteil angeordnet ist bzw. wird, kann ein Abstand zwischen dem Verzugskompensator und dem Bauteil wenige hundertstel Millimeter betragen. Dabei kann der Abstand insbesondere in Abhängigkeit einer thermischen Verzugskonstante eines das Bauteil bildenden Materials und/oder in Abhängigkeit einer vorgegebenen Fertigungstoleranz des Bauteils gewählt werden.

Aufgrund einer Eigenbewegung des Bauteils kann es zu einer Situation kommen, in der das Bauteil den Verzugskompensator berührt, obwohl der Verzugskompensator beabstandet von dem Bauteil angeordnet wurde.

Der Verzugskompensator kann aus dem gleichen Material bestehen bzw. aufgebaut werden, wie das Bauteil. Alternativ oder zusätzlich kann der Verzugskompensator weitere Materialien, wie bspw. Härtungskomponenten, wie bspw. ein Metall umfassen, die den Verzugskompensator härter machen als das Bauteil, um eine Deformierung des Verzugskompensators und eine dadurch ggf. bedingte Deformierung des Bauteils zu verhindern.

Die vorgestellte Erfindung, insbesondere das vorgestellte Herstellungsverfahren, ermöglicht eine Anordnung von besonders großen und schweren Strukturen eines Bauteils auf besonders dünnen und leichten Strukturen des Bauteils, da eine Eigenbewegung der großen und schweren Strukturen, die zu einer Deformierung der dünnen und leichten Strukturen führen könnte, durch den Verzugskompensator blockiert wird. Entsprechend kann eine Vielzahl von dünnen und leichten Strukturen in dem additiven Fertigungsprozess als von dem Bauteil umfasste Stützelemente mit der großen und schweren Struktur verbunden werden, nachdem die große und schwere Struktur gebildet wurde. Dies bedeutet, dass unter Verwendung der vorgestellten Erfindung komplexe Bauteile unabhängig von einer inneren Statik beim Aufbau der Bauteile hergestellt werden können und eine Form der Bauteile weitestgehend unabhängig von deren Fertigungsprozess gewählt werden kann.

In einer möglichen Ausgestaltung der vorgestellten Erfindung ist vorgesehen, dass ein erstes Ende des Verzugskompensators formschlüssig an dem Bauteil angeordnet wird.

Durch eine formschlüssige Anordnung eines Endes des Verzugskompensators an einem jeweiligen Bauteil wird ein Bewegungsraum, in dem sich das Bauteil bei einer Eigenbewegung aufgrund von thermischem Verzug bewegen kann, bis es zu einem Kontakt zwischen Bauteil und Verzugskompensator kommt, minimiert. Entsprechend bewirkt eine formschlüssige Anordnung eines Endes des Verzugskompensators an dem Bauteil eine besonders exakte Ausformung des Bauteils bzw. eine sehr geringe Fertigungstoleranz.

In einer weiteren möglichen Ausgestaltung der vorgestellten Erfindung ist vorgesehen, dass ein weiteres Ende des Verzugskompensators mit dem Bauteil und/oder dem Substrat verbunden wird, so dass bei der Eigenbewegung des Bauteils auf den Verzugskompensator wirkende Kräfte durch den Verzugskompensator zumindest teilweise in das Substrat und/oder das Bauteil abgeleitet werden.

Der Verzugskompensator kann ein erstes Ende, das lösbar, insbesondere formschlüssig mit dem Bauteil verbunden bzw. verbindbar ist umfassen. Zusätzlich kann der Verzugskompensator ein weiteres Ende umfassen, das nicht formschlüssig, sondern bspw. formschlüssig oder stoffschlüssig mit einem Substrat oder dem Bauteil verbunden bzw. verbindbar ist, um eine Bewegung des Verzugskompensators bei einem Kontakt zu dem Bauteil zu minimieren und bei der Bewegung entstehende Kräfte von dem ersten Ende über das weitere Ende abzuleiten.

Gemäß der vorgestellten Erfindung ist vorgesehen, dass der Verzugskompensator derart an dem Bauteil angeordnet wird, dass die Eigenbewegung des Bauteils zumindest in X-Richtung und/oder Y-Richtung blockiert wird.

Um die Eigenbewegung des Bauteils zumindest in X-Richtung und/oder Y-Richtung zu blockieren, kann sich der Verzugskompensator im Wesentlichen, d.h. mit einer höheren Materialstärke in X-Richtung und/oder Y-Richtung als in z-Richtung erstrecken. Alternativ oder zusätzlich kann der Verzugskompensator in X-Richtung und/oder Y-Richtung geneigt ausgerichtet werden, um entsprechende Kräfte bei einer Eigenbewegung des Bauteil in X-Richtung und/oder Y-Richtung effizient aufzunehmen bzw. abzuleiten.

In einer weiteren möglichen Ausgestaltung der vorgestellten Erfindung ist vorgesehen, dass mittels des Verzugskompensators die Eigenbewegung des Bauteils in einem Bereich blockiert wird, der ausgewählt wird aus der folgenden Liste an Bereichen: selbsttragender Winkel, Überhang, Kanal und/oder Stützbereich, dessen Winkel zu dem Substrat kleiner ist als ein vorgegebener Grenzwinkel und/oder Stützbereich, dessen Winkel zu einem weiteren Bereich kleiner ist als der vorgegebene Grenzwinkel.

Durch eine Anordnung des Verzugskompensators in einem Bereich, in dem besonders starke thermische Spannungen auftreten, wie bspw. einem Bereich mit einer inhomogenen Form, insbesondere seinem selbsttragenden Winkel, einem Überhang, einem Kanal und/oder einem Stützbereich, dessen Winkel zu dem Substrat kleiner ist als ein vorgegebener Grenzwinkel und/oder einem Stützbereich, dessen Winkel zu einem weiteren Bereich kleiner ist als der vorgegebene Grenzwinkel, können entsprechend starke Eigenbewegungen des Bauteils effizient blockiert werden.

In einer weiteren möglichen Ausgestaltung der vorgestellten Erfindung ist vorgesehen, dass der Verzugskompensator zusammen mit dem Bauteil während des additiven Fertigungsprozesses aufgeschichtet wird.

Durch eine gemeinsame Herstellung von Bauteil und Verzugskompensator kann eine Eigenbewegung des Bauteils direkt während der Herstellung von dem Verzugskompensator blockiert werden. Da sich thermische Spannungen bei einer Abkühlung von Materialschichten direkt nach deren Auftrag bzw. Aufschmelzung erst aufbauen und entsprechend noch nicht besonders hoch sind, ist es besonders vorteilhaft entsprechende Kräfte, die zu einer Eigenbewegung des Bauteils führen, direkt bei deren Entstehung abzuleiten und, dadurch bedingt, eine Aufsummierung von Kräften, die zu einer besonders großen Eigenbewegung führen können, zu verhindern.

In einer weiteren möglichen Ausgestaltung der vorgestellten Erfindung ist vorgesehen, dass der Verzugskompensator als vorgefertigtes Element während des additiven Fertigungsprozesses oder nach dem additiven Fertigungsprozess an dem Bauteil angeordnet wird.

Vorgefertigte Verzugskompensatoren sind beim Anordnen an einem Bauteil bereits vollständig ausgehärtet, so dass diese direkt beim Anordnen starke Kräfte aufnehmen bzw. ableiten können.

In einer weiteren möglichen Ausgestaltung der vorgestellten Erfindung ist vorgesehen, dass der Verzugskompensator mit einem vorgegebenen Höchstabstand an dem Bauteil angeordnet wird, wobei der Höchstabstand kleiner ist als eine Strecke, um die sich ein dem Verzugskompensator zugeordneter Bereich des Bauteils aufgrund der Eigenbewegung bewegt.

Ein Abstand zwischen Verzugskompensator und Bauteil bewirkt eine besonders gute bzw. einfache Lösbarkeit des Verzugskompensators von dem Bauteil. Dabei bedingt ein geringer Höchstabstand des Verzugskompensators von dem Bauteil eine geringe Fertigungstoleranz, da ein Raum für eine Eigenbewegung des Bauteils aufgrund von thermischem Verzug minimiert wird.

In einer weiteren möglichen Ausgestaltung der vorgestellten Erfindung ist vorgesehen, dass zwischen dem Verzugskompensator und dem Bauteil ein Pulver eingebracht wird. Bei dem Pulver kann es sich vorzugsweise um das Prozesspulver handeln. Dieses ist bedingt durch den Herstellungsprozess der additiven Fertigung typischerweise ohnehin vorhanden. Das Pulver entfaltet auf diese Weise eine stabilisierende Wirkung.

Ein zwischen dem Verzugskompensator und dem Bauteil eingebrachtes Pulver, das bspw. schichtweise in eine Lücke zwischen dem Bauteil und dem Verzugskompensator aufgeschüttet wird, während das Bauteil und der Verzugskompensator aufgebaut werden, sichert zum einen den Abstand zwischen dem Verzugskompensator und dem Bauteil, indem es eine Verbindung zwischen dem Verzugskompensator und dem Bauteil blockiert. Zum anderen kann ein zwischen dem Verzugskompensator und dem Bauteil eingebrachtes Pulver Kräfte, die bei einer Eigenbewegung des Bauteils auftreten, aufnehmen.

Die Ausführungen hier betreffen einen Verzugskompensator zur Herstellung eines Bauteils in einem additiven Fertigungsprozess. Der Verzugskompensator ist lösbar an dem Bauteil anzuordnen und dazu konfiguriert, eine aufgrund von thermischem Verzug auftretende Eigenbewegung des Bauteils zu blockieren.

Insbesondere dient der vorgestellte Verzugskompensator zur Durchführung des vorgestellten Herstellungsverfahrens.

Um eine Eigenbewegung eines jeweiligen Bauteils zu blockieren, ist der Verzugskompensator bspw dazu konfiguriert, aufgrund von thermischen Spannungen in dem Bauteil wirkende Kräfte aufzunehmen bzw. abzuleiten. Dazu kann der Verzugskompensator bspw. dazu konfiguriert sein, mit einem Ende lösbar an einem jeweiligen Bauteil angeordnet und mit einem anderen Ende mit einem Substrat, auf dem das Bauteil angeordnet ist, insbesondere stoffschlüssig verbunden zu werden.

In einem weiteren Aspekt betrifft die vorgestellte Erfindung ein Bauteilsystem, das im Anspruch 9 definiert ist.

Das Bauteilsystem umfasst ein in einem additiven Fertigungsprozess hergestelltes Bauteil und einen Verzugskompensator. Der Verzugskompensator ist lösbar an dem Bauteil angeordnet, um eine aufgrund von thermischem Verzug auftretende Eigenbewegung des Bauteils zu blockieren.

Das vorgestellte Bauteilsystem bewirkt eine besonders formgetreue Aushärtung bzw. Abkühlung des Bauteils, so dass das Bauteil des vorgestellten Bauteilsystems eine sehr geringe Fertigungstoleranz zeigt.

In einem weiteren Aspekt betrifft die vorgestellte Erfindung ein computerimplementiertes Verfahren zur Herstellung eines Bauteils in einem additiven Fertigungsprozess. Das Verfahren ist im Anspruch 10 definiert.

Das vorgestellte Verfahren zur Herstellung eines Bauteils in einem additiven Fertigungsprozess ermöglicht, wenn es auf einem Computer ausgeführt wird, eine automatisierte Ausführung des vorgestellten Herstellungsverfahrens.

In einer möglichen Ausgestaltung der vorgestellten Erfindung ist vorgesehen, dass der zweite Erzeugungsschritt umfasst, dass ein Modell des Bauteils auf einer Anzeige ausgegeben wird und in dem Modell solche Bereiche markiert werden, deren aufgrund von thermischem Verzug auftretende Eigenbewegung ein Verzugskompensator blockieren kann, wobei die Bereiche ausgewählt sind aus der folgenden Liste an Bereichen: selbsttragender Winkel, Überhang, Kanal und/oder Bereiche, deren Winkel zu einem Substrat kleiner ist als ein vorgegebener Grenzwinkel und/oder Bereiche, deren Winkel zu einem weiteren Bereich kleiner ist als der vorgegebene Grenzwinkel.

Durch eine Markierung von Bereichen in einem Modell eines jeweiligen Bauteils, deren Eigenbewegung ein Verzugskompensator blockieren kann, erhält ein Nutzer einen Einblick in eine innere Statik des Bauteils und kann dadurch jeweilige Verzugskompensatoren platzieren bzw. ausbilden lassen, um einen thermischen Verzug bzw. eine entsprechende Verformung des Bauteils zu verhindern.

Insbesondere ermöglicht das vorgestellte computerimplementierte Verfahren eine Festlegung einer Sequenz zur Erzeugung verschiedener Verzugskompensatoren, d.h. einem zeitlich versetzten Erzeugen einer Vielzahl Verzugskompensatoren, so dass eine innere Statik eines in einem additiven Fertigungsprozess erzeugten Bauteils mit zunehmender Größe des Bauteils erhöht wird und große Stützstrukturen, die von Beginn eines jeweiligen Fertigungsprozesses an mitwachsen bzw. aufgeschichtet werden, vermieden werden.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Figur 1:: eine mögliche Ausgestaltung des erfindungsgemäßen Herstellungsverfahrens.
- Figur 2:: eine mögliche Ausgestaltung des erfindungsgemäßen Bauteilsystems mit einer möglichen Ausgestaltung des erfindungsgemäßen Verzugskompensators.
- Figur 3:: eine mögliche Ausgestaltung des erfindungsgemäßen computerimplementieren Verfahrens.
- Figur 4:: einen systematischen Vergleich zwischen einem Bauteil, das ohne den erfindungsgemäßen Verzugskompensator hergestellt wurde und einem Bauteil, das mit dem erfindungsgemäßen Verzugskompensator hergestellt wurde.
- Figur 5:: eine weitere mögliche Ausgestaltung des erfindungsgemäßen Bauteilsystems.
- Figur 6:: eine Darstellung von in einem Bauteil wirkenden Kräften.
- Figur 7:: eine Darstellung des Bauteils gemäß Figur 6 mit einer möglichen Ausgestaltung des erfindungsgemäßen Verzugskompensators.
- Figur 8:: eine weitere Darstellung des Bauteils gemäß Figur 7.

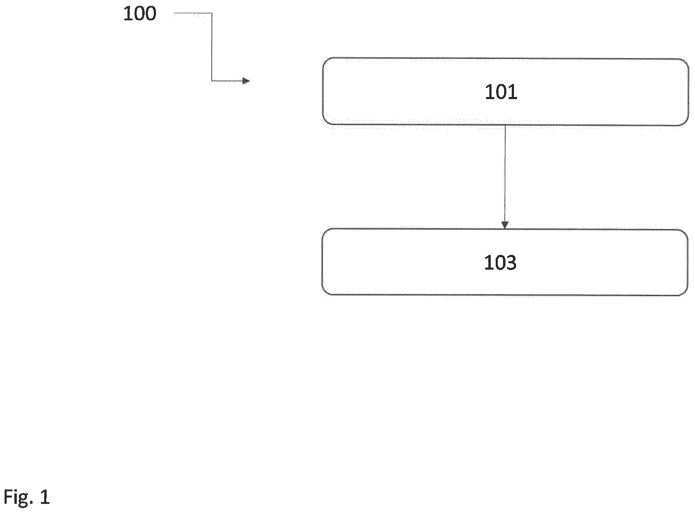

In Figur 1 ist ein Herstellungsverfahren 100 dargestellt. Das Herstellungsverfahren 100 umfasst einen Fertigungsschritt 101, bei dem ein Bauteil in einem additiven Fertigungsprozess auf einem Substrat aufgeschichtet wird, und einen Anordnungsschritt 103, bei dem ein Verzugskompensator lösbar an dem Bauteil angeordnet wird, um eine durch thermischen Verzug bedingte Eigenbewegung des Bauteils zu blockieren.

Der Fertigungsschritt 101 und der Anordnungsschritt 103 können parallel bzw. zeitgleich in einem gemeinsamen Fertigungsprozess aufgeschichtet werden. Alternativ kann der Anordnungsschritt 103 nach oder vor dem Fertigungsschritt 101 durchgeführt werden.

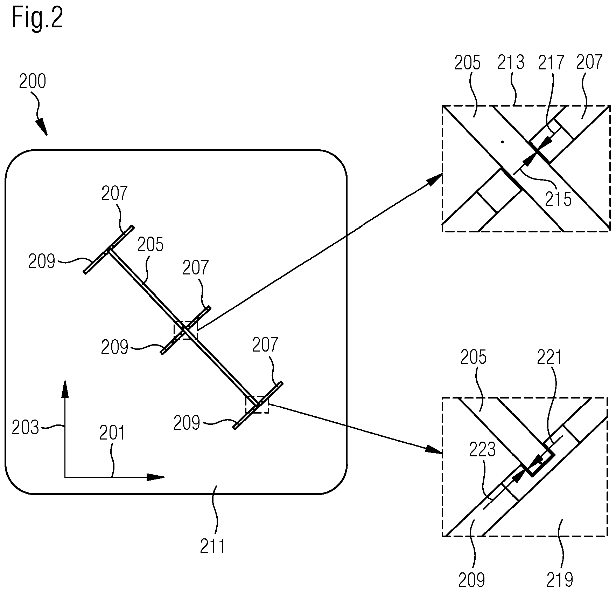

In Figur 2 ist ein Bauteilsystem 200 in einer Draufsicht dargestellt, wie durch eine schematisch dargestellte x-Achse 201 und eine entsprechende y-Achse 203 angedeutet. Das Bauteilsystem 200 umfasst ein in einem additiven Fertigungsprozess, wie bspw. dem Herstellungsverfahren 100 gemäß Figur 1 hergestelltes Bauteil 205, und jeweils gegenüberliegend lösbar an dem Bauteil 205 angeordnete Verzugskompensatoren 207 und 209 angeordnet ist, um eine aufgrund von thermischem Verzug auftretende Eigenbewegung des Bauteils 201 zu blockieren.

Insbesondere sind die Verzugskompensatoren 207 und 209 jeweils formschlüssig an dem Bauteil 205 angeordnet.

Das Bauteilsystem 200 ist auf einem Substrat 211 aufgeschichtet.

In einem ersten Detailausschnitt 213 ist erkennbar, dass der Verzugskompensator 207 eine Eigenbewegung des Bauteils 205, angedeutet durch einen Pfeil 215, blockiert, indem der Eigenbewegung eine Gegenkraft bereitgestellt wird, wie durch einen Pfeil 217 angedeutet.

In einem ersten Detailausschnitt 219 ist erkennbar, dass der Verzugskompensator 209 eine Eigenbewegung des Bauteils 205, angedeutet durch einen Pfeil 221, blockiert, indem der Eigenbewegung eine Gegenkraft bereitgestellt wird, wie durch einen Pfeil 223 angedeutet.

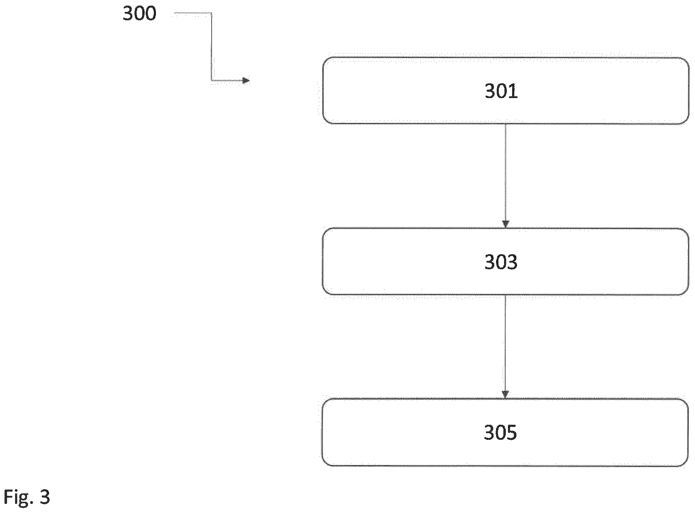

In Figur 3 ist ein Verfahren 300 dargestellt, das auf einem Computer implementiert bzw. ausgeführt wird.

Das Verfahren 300 umfasst einen ersten Erzeugungsschritt 301, bei dem Bauteilanweisungen zur Herstellung des Bauteils mittels einer additiven Fertigungsvorrichtung erzeugt werden, einen zweiten Erzeugungsschritt 303, bei dem Kompensatoranweisungen zur Herstellung eines Verzugskompensators mittels der additiven Fertigungsvorrichtung erzeugt werden, wobei die Kompensatoranweisungen umfassen, dass der Verzugskompensator lösbar an dem Bauteil angeordnet wird, um eine aufgrund von thermischem Verzug auftretende Eigenbewegung des Bauteils zu blockieren, und einen Übermittlungsschritt 305, bei dem die Bauteilanweisungen und die Kompensatoranweisungen an die additive Fertigungsvorrichtung übermittelt werden.

In dem Übermittlungsschritt 305 wird die additive Fertigungsvorrichtung, insbesondere ein 3D-Drucker, durch die Bauteilanweisungen und die Kompensatoranweisungen dazu konfiguriert, eine mögliche Ausgestaltung des erfindungsgemäßen Bauteilsystems zu fertigen.

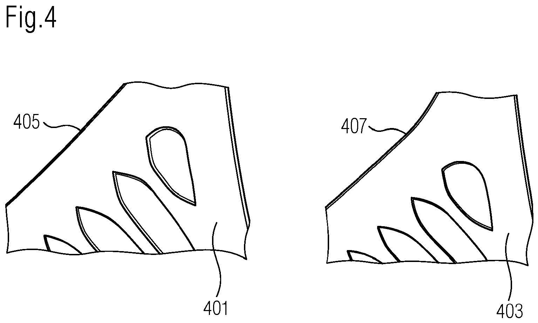

In Figur 4 sind ein erstes Bauteil 401 und ein zweites Bauteil 403 dargestellt.

Das erste Bauteil 401 wurde in einem additiven Herstellungsprozess ohne Verwendung einer möglichen Ausgestaltung des erfindungsgemäßen Verzugskompensators geformt.

Das zweite Bauteil 403 wurde in einem additiven Herstellungsprozess unter Verwendung einer möglichen Ausgestaltung des erfindungsgemäßen Verzugskompensators geformt.

Es ist erkennbar, dass sich eine Kante 405 des ersten Bauteils 401 gegenüber einer Kante 407 des zweiten Bauteils verformt hat. Diese Verformung des ersten Bauteils 401 ist bedingt durch eine aufgrund von thermischen Spannungen in dem Bauteil 401 auftretender Eigenbewegung.

Da das zweite Bauteil 403 unter Verwendung einer möglichen Ausgestaltung des erfindungsgemäßen Verzugskompensators geformt wurde, hat der Verzugskompensator während der Ausformung des zweiten Bauteils 403 die Eigenbewegung der Kante 407 des zweiten Bauteils 403 blockiert und entsprechend eine Verformung analog zu dem ersten Bauteil 401 verhindert.

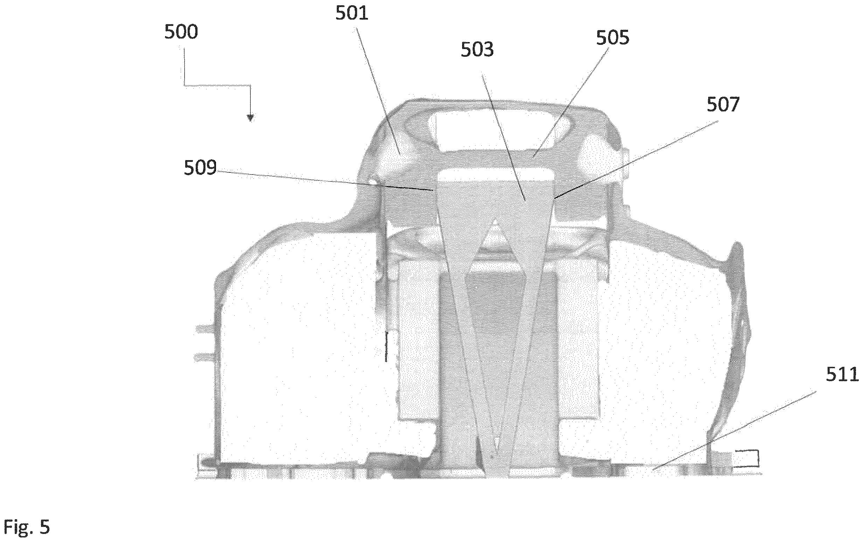

In Figur 5 ist ein Bauteilsystem 500 dargestellt. Das Bauteilsystem 500 umfasst ein Bauteil 501 und einen Verzugskompensator 503, die auf einem Substrat 511 aufgeschichtet sind.

Der Verzugskompensator 503 ist unter einem Überhang 505 des Bauteils 501 angeordnet. Weiterhin ist der Verzugskompensator 503 an jeweiligen Seitenflächen 507 und 509 des Überhangs 505 angeordnet, so dass der Verzugskompensator 503 insbesondere eine Eigenbewegung durch Zusammenbiegen von Seitenflächen 507 und 509, aufgrund eines Zusammenwachsens von Material in dem Überhang 505, blockiert.

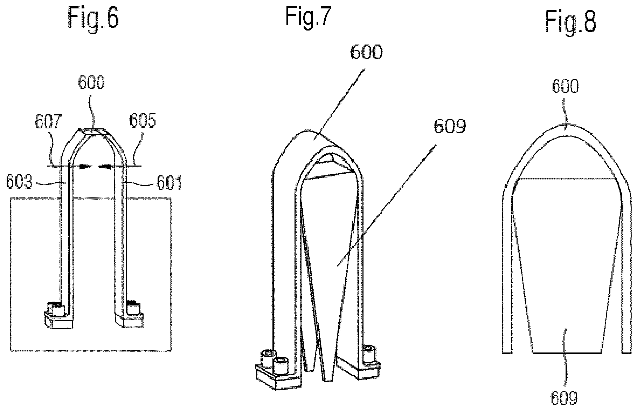

In Figur 6 ist ein Bauteil 600 dargestellt. Das Bauteil 600 wurde torförmig in einem 3D-Drucker aufgebaut, so dass sich beim Abkühlen des Bauteils 600 nach einem Fertigungsprozess thermische Spannungen aufgrund von Schrumpfungen in dem Bauteil 600 einstellen, die eine Eigenbewegung von Seitenteilen 601 und 603 bedingen, wie durch Pfeile 605 und 607 angedeutet. Dies bedeutet, dass die Seitenteile 601 und 603 leicht zueinander wandern, wobei jeweilig nachfolgend aufgetragene Schichten des Bauteils 600 die Schrumpfung wieder in einer zusammenhängenden Fläche kompensieren, so dass sich ohne den erfindungsgemäßen Verzugskompensator eine Kante an der Stelle bildet, an der die beiden Seitenteile 601 und 603 "zusammenwachsen".

Um die Eigenbewegung und eine dadurch bedingte Verformung des Bauteils 600 zu blockieren, ist erfindungsgemäß ein Verzugskompensator 609 vorgesehen, der lösbar an dem Bauteil 600 angeordnet wird, wie in Figur 7 dargestellt. Durch den Verzugskompensator 609 wird ein Schrumpfen bzw. ein Zusammenziehen des Bauteils 600 verhindert und die Kantenbildung in dem Bauteil 600 minimiert.

In Figur 8 ist die lösbare Verbindung zwischen Bauteil 600 und Verzugskompensator 609 im Detail dargestellt. Hier ist erkennbar, dass der Verzugskompensator 609 formschlüssig an dem Bauteil 600 angeordnet ist. Dabei ist die formschlüssige Verbindung derart gestaltet, dass der Verzugskompensator 609 von dem Bauteil 600 gelöst werden kann, ohne das Bauteil 600 oder den Verzugskompensator 609 zu beschädigen.

### BEZUGSZEICHENLISTE

- 100: Herstellungsverfahren
- 101: Fertigungsschritt
- 103: Anordnungsschritt
- 200: Bauteilsystem
- 201: x-Achse
- 203: y-Achse
- 205: Bauteil
- 207: Verzugskompensator
- 209: Verzugskompensator
- 211: Substrat
- 213: Detailausschnitt
- 215: Pfeil
- 217: Pfeil
- 219: Detailausschnitt
- 221: Pfeil
- 223: Pfeil
- 300: Verfahren
- 301: erster Erzeugungsschritt
- 303: zweiter Erzeugungsschritt
- 305: Übermittlungsschritt
- 401: erstes Bauteil
- 403: zweites Bauteil
- 405: Kante
- 407: Kante
- 500: Bauteilsystem
- 501: Bauteil
- 503: Verzugskompensator
- 505: Überhang
- 507: Seitenteil
- 509: Seitenteil
- 511: Substrat
- 600: Bauteil
- 601: Seitenteil
- 603: Seitenteil
- 605: Pfeil
- 607: Pfeil
- 609: Verzugskompensator

## Patentansprüche

1. Herstellungsverfahren (100) zur Herstellung eines Bauteils (201, 403, 501, 600, 600),
bei dem ein Bauteil (201, 403, 501, 600) in einem additiven Fertigungsprozess auf einem Substrat aufgeschichtet wird,
wobei
ein Verzugskompensator (207, 209, 503, 609) lösbar an dem Bauteil (201, 403, 501, 600) angeordnet wird, um eine durch thermischen Verzug bedingte Eigenbewegung des Bauteils (201, 403, 501, 600) zu blockieren, wobei die lösbare Anordnung des Verzugskompensators (207, 209, 503, 609) an dem Bauteil (201, 403, 501, 600) eine formschlüssige jedoch nicht stoffschlüssige Verbindung umfasst und/oder die lösbare Anordnung des Verzugskompensators (207, 209, 503, 609) an dem Bauteil (201, 403, 501, 600) derart ausgestaltet wird, dass der Verzugskompensator (207, 209, 503, 609) beabstandet von dem Bauteil (201, 403, 501, 600) angeordnet wird und wobei der Verzugskompensator (207, 209, 503, 609) derart an dem Bauteil (201, 403, 501, 600) angeordnet wird, dass die Eigenbewegung des Bauteils (201, 403, 501, 600) zumindest in Richtung einer waagerecht zu dem Substrat verlaufenden Abszissenachse blockiert wird.

2. Herstellungsverfahren (100) nach Anspruch 1,
**dadurch gekennzeichnet, dass**, im Falle der erwähnten formschlüssigen jedoch nicht stoffschlüssigen Verbindung,
ein erstes Ende des Verzugskompensators (207, 209, 503, 609) formschlüssig an dem Bauteil (201, 403, 501, 600) angeordnet wird.

3. Herstellungsverfahren (100) nach Anspruch 2,
**dadurch gekennzeichnet, dass**
ein weiteres Ende des Verzugskompensators (207, 209, 503, 609) mit dem Bauteil (201, 403, 501, 600) und/oder dem Substrat verbunden wird, so dass bei der Eigenbewegung des Bauteils (201, 403, 501, 600) auf den Verzugskompensator (207, 209, 503, 609) wirkende Kräfte durch den Verzugskompensator (207, 209, 503, 609) zumindest teilweise in das Substrat und/oder das Bauteil (201, 403, 501, 600) abgeleitet werden.

4. Herstellungsverfahren (100) nach einem der vorhergehenden Ansprüche,
**dadurch gekennzeichnet, dass**
mittels des Verzugskompensators (207, 209, 503, 609) die Eigenbewegung des Bauteils (201, 403, 501, 600) in einem Bereich blockiert wird, der ausgewählt wird aus der folgenden Liste an Bereichen: selbsttragender Winkel, Überhang (505), Kanal und/oder Stützbereich, dessen Winkel zu dem Substrat kleiner ist als ein vorgegebener Grenzwinkel und/oder Stützbereich, dessen Winkel zu einem weiteren Bereich kleiner ist als der vorgegebene Grenzwinkel.

5. Herstellungsverfahren (100) nach einem der vorhergehenden Ansprüche,
**dadurch gekennzeichnet, dass**
der Verzugskompensator (207, 209, 503, 609) zusammen mit dem Bauteil (201, 403, 501, 600) während des additiven Fertigungsprozesses aufgeschichtet wird.

6. Herstellungsverfahren (100) nach einem der Ansprüche 1 bis 4,
**dadurch gekennzeichnet, dass**
der Verzugskompensator (207, 209, 503, 609) als vorgefertigtes Element während des additiven Fertigungsprozesses oder nach dem additiven Fertigungsprozess an dem Bauteil (201, 403, 501, 600) angeordnet wird.

7. Herstellungsverfahren (100) nach einem der vorhergehenden Ansprüche,
**dadurch gekennzeichnet, dass**
der Verzugskompensator (207, 209, 503, 609) mit einem vorgegebenen Höchstabstand an dem Bauteil (201, 403, 501, 600) angeordnet wird,
wobei der Höchstabstand kleiner ist als eine Strecke, um die sich ein dem Verzugskompensator (207, 209, 503, 609) zugeordneter Bereich des Bauteils (201, 403, 501, 600) aufgrund der Eigenbewegung bewegt.

8. Herstellungsverfahren (100) nach einem der vorhergehenden Ansprüche,
**dadurch gekennzeichnet, dass**
zwischen dem Verzugskompensator (207, 209, 503, 609) und dem Bauteil (201, 403, 501, 600) ein Pulver eingebracht wird.

9. Bauteilsystem (200, 500),
wobei das Bauteilsystem (200, 500) umfasst:
- ein in einem additiven Fertigungsprozess hergestelltes Bauteil (201, 403, 501, 600), und
- einen Verzugskompensator (207, 209, 503, 609),
wobei
der Verzugskompensator (207, 209, 503, 609) lösbar an dem Bauteil (201, 403, 501, 600) angeordnet ist, um eine aufgrund von thermischem Verzug auftretende Eigenbewegung des Bauteils (201, 403, 501, 600) zu blockieren, wobei der Verzugskompensator (207, 209, 503, 609) mit dem Bauteil (201, 403, 501, 600) formschlüssig jedoch nicht stoffschlüssig verbunden ist und/oder der Verzugskompensator (207, 209, 503, 609) an dem Bauteil (201, 403, 501, 600) derart ausgestaltet ist, dass der Verzugskompensator (207, 209, 503, 609) beabstandet von dem Bauteil (201, 403, 501, 600) angeordnet ist und wobei der Verzugskompensator (207, 209, 503, 609) derart an dem Bauteil (201, 403, 501, 600) angeordnet ist, dass die Eigenbewegung des Bauteils (201, 403, 501, 600) zumindest in Richtung einer waagerecht zu dem Substrat verlaufenden Abszissenachse blockiert ist.

10. Computerimplementiertes Verfahren (300) zur Herstellung eines Bauteils (201, 403, 501, 600) in einem additiven Fertigungsprozess, wobei das Verfahren (300) umfasst:
- einen ersten Erzeugungsschritt (301), bei dem Bauteilanweisungen zur Herstellung des Bauteils (201, 403, 501, 600) mittels einer additiven Fertigungsvorrichtung auf einem Substrat erzeugt werden, wobei
das Verfahren (300) weiterhin umfasst:
- einen zweiten Erzeugungsschritt (303), bei dem Kompensatoranweisungen zur Herstellung eines Verzugskompensators (207, 209, 503, 609) mittels der additiven Fertigungsvorrichtung erzeugt werden,
wobei die Kompensatoranweisungen umfassen, dass der Verzugskompensator (207, 209, 503, 609) lösbar an dem Bauteil (201, 403, 501, 600) angeordnet wird, um eine aufgrund von thermischem Verzug auftretende Eigenbewegung des Bauteils (201, 403, 501, 600) zu blockieren, wobei die lösbare Anordnung des Verzugskompensators (207, 209, 503, 609) an dem Bauteil (201, 403, 501, 600) eine formschlüssige jedoch nicht stoffschlüssige Verbindung umfasst und/oder die lösbare Anordnung des Verzugskompensators (207, 209, 503, 609) an dem Bauteil (201, 403, 501, 600) derart ausgestaltet wird, dass der Verzugskompensator (207, 209, 503, 609) beabstandet von dem Bauteil (201, 403, 501, 600) angeordnet wird und wobei der Verzugskompensator (207, 209, 503, 609) derart an dem Bauteil (201, 403, 501, 600) angeordnet wird, dass die Eigenbewegung des Bauteils (201, 403, 501, 600) zumindest in Richtung einer waagerecht zu dem Substrat verlaufenden Abszissenachse blockiert wird, und
- einen Übermittlungsschritt (305), bei dem die Bauteilanweisungen und die Kompensatoranweisungen an die additive Fertigungsvorrichtung übermittelt werden.

11. Verfahren (300) nach Anspruch 10,
wobei der zweite Erzeugungsschritt (303) umfasst, dass ein Modell des Bauteils (201, 403, 501, 600) auf einer Anzeige ausgegeben wird und in dem Modell solche Bereiche markiert werden, deren aufgrund von thermischem Verzug auftretende Eigenbewegung ein Verzugskompensator (207, 209, 503, 609) blockieren kann, wobei die Bereiche ausgewählt sind aus der folgenden Liste an Bereichen: selbsttragender Winkel, Überhang (505), Kanal und/oder Bereiche, deren Winkel zu einem Substrat kleiner ist als ein vorgegebener Grenzwinkel und/oder Bereiche, deren Winkel zu einem weiteren Bereich kleiner ist als der vorgegebene Grenzwinkel.

## Claims

1. A manufacturing method (100) for manufacturing a component (201, 403, 501, 600, 600),
in which a component (201, 403, 501, 600) is coated onto a substrate in an additive production process, wherein
a warpage compensator (207, 209, 503, 609) is detachably arranged on the component (201, 403, 501, 600), so as to block a proper motion of the component (201, 403, 501, 600) caused by thermal warpage, wherein the detachable arrangement of the warpage compensator (207, 209, 503, 609) on the component (201, 403, 501, 600) comprises a form-fit, but not material connection and/or the detachable arrangement of the warpage compensator (207, 209, 503, 609) on the component (201, 403, 501, 600) is configured in such a way that the warpage compensator (207, 209, 503, 609) is arranged spaced apart from the component (201, 403, 501, 600), and wherein the warpage compensator (207, 209, 503, 609) is arranged on the component (201, 403, 501, 600) in such a way that the proper motion of the component (201, 403, 501, 600) is blocked at least in the direction of an x-axis that runs horizontally to the substrate.

2. The manufacturing method (100) according to claim 1,
**characterized in that**, in the case of the mentioned form-fit but not material connection, a first end of the warpage compensator (207, 209, 503, 609) is arranged on the component (201, 403, 501, 600) in a form-fit manner.

3. The manufacturing method (100) according to claim 2,
**characterized in that** an additional end of the warpage compensator (207, 209, 503, 609) is connected with the component (201, 403, 501, 600) and/or the substrate, so that forces acting on the warpage compensator (207, 209, 503, 609) during the proper motion of the component (201, 403, 501, 600) are at least partially diverted by the warpage compensator (207, 209, 503, 609) into the substrate and/or the component (201, 403, 501, 600).

4. The manufacturing method (100) according to one of the preceding claims,
**characterized in that**
the warpage compensator (207, 209, 503, 609) is used to block the proper motion of the component (201, 403, 501, 600) in an area selected from the following list of areas: self-supporting angle, overhang (505), channel and/or support area whose angle relative to the substrate is smaller than a preset limit angle and/or support area whose angle relative to another area is smaller than the preset limit angle.

5. The manufacturing method (100) according to one of the preceding claims,
**characterized in that**
the warpage compensator (207, 209, 503, 609) is layered together with the component (201, 403, 501, 600) during the additive production process.

6. The manufacturing method (100) according to one of claims 1 to 4, **characterized in that**
the warpage compensator (207, 209, 503, 609) is arranged on the component (201, 403, 501, 600) as a prefabricated element during the additive production process or after the additive production process.

7. The manufacturing method (100) according to one of the preceding claims,
**characterized in that**
the warpage compensator (207, 209, 503, 609) is arranged on the component (201, 403, 501, 600) with a preset maximum distance, wherein the maximum distance is smaller than a distance by which an area of the component (201, 403, 501, 600) allocated to the warpage compensator (207, 209, 503, 609) moves due to the proper motion.

8. The manufacturing method (100) according to one of the preceding claims,
**characterized in that**
a powder is introduced between the warpage compensator (207, 209, 503, 609) and the component (201, 403, 501, 600).

9. A component system (200, 500),
wherein the component system (200, 500) comprises:
- a component (201, 403, 501, 600) manufactured in an additive production process, and
- a warpage compensator (207, 209, 503, 609),
wherein
the warpage compensator (207, 209, 503, 609) is detachably arranged on the component (201, 403, 501, 600), so as to block a proper motion of the component (201, 403, 501, 600) caused by thermal warpage, wherein the warpage compensator (207, 209, 503, 609) is connected with the component (201, 403, 501, 600) in a form-fit, but not material manner, and/or the warpage compensator (207, 209, 503, 609) on the component (201, 403, 501, 600) is configured in such a way that the warpage compensator (207, 209, 503, 609) is arranged spaced apart from the component (201, 403, 501, 600), and wherein the warpage compensator (207, 209, 503, 609) is arranged on the component (201, 403, 501, 600) in such a way that the proper motion of the component (201, 403, 501, 600) is blocked at least in the direction of an x-axis that runs horizontally to the substrate.

10. A computer-implemented method (300) for manufacturing a component (201, 403, 501, 600) in an additive production process, wherein the method (300) comprises:
- a first generating step (301) in which component instructions for manufacturing the component (201, 403, 501, 600) by means of an additive production device on a substrate are generated, wherein the method (300) further comprises:
- a second generating step (303) in which compensator instructions for manufacturing a warpage compensator (207, 209, 503, 609) by means of the additive production process are generated,
wherein the compensator instructions involve detachably arranging the warpage compensator (207, 209, 503, 609) on the component (201, 403, 501, 600), so as to block a proper motion of the component (201, 403, 501, 600) arising due to thermal warpage, wherein the detachable arrangement of the warpage compensator (207, 209, 503, 609) on the component (201, 403, 501, 600) comprises a form-fit, but not material connection and/or the detachable arrangement of the warpage compensator (207, 209, 503, 609) on the component (201, 403, 501, 600) is configured in such a way that the warpage compensator (207, 209, 503, 609) is arranged spaced apart from the component (201, 403, 501, 600), and wherein the warpage compensator (207, 209, 503, 609) is arranged on the component (201, 403, 501, 600) in such a way that the proper motion of the component (201, 403, 501, 600) is blocked at least in the direction of an x-axis that runs horizontally to the substrate, and
- a transmitting step (305) in which the component instructions and the compensator instructions are transmitted to the additive production device.

11. The method (300) according to claim 10,
wherein
the second generating step (303) involves outputting a model of the component (201, 403, 501, 600) on a display, and marking those areas in the model whose proper motion arising due to thermal warpage can be blocked by a warpage compensator (207, 209, 503, 609), wherein the areas are selected from the following list of areas: self-supporting angle, overhang (505), channel and/or areas whose angle relative to a substrate is smaller than a preset limit angle and/or areas whose angle relative to another area is smaller than the preset limit angle.

## Revendications

1. Procédé de fabrication (100) pour fabriquer une pièce (201, 403, 501, 600, 600),
dans lequel une pièce (201, 403, 501, 600) est mise en couche sur un substrat dans un procédé de fabrication additive,
dans lequel
un compensateur de déformation (207, 209, 503, 609) est disposé séparable contre la pièce (201, 403, 501, 600) pour bloquer un mouvement propre de la pièce (201, 403, 501, 600) dû à une déformation thermique, dans lequel l'agencement séparable du compensateur de déformation (207, 209, 503, 609) contre la pièce (201, 403, 501, 600) comprend une liaison par complémentarité de forme sans être par liaison de matière et/ou l'agencement séparable du compensateur de déformation (207, 209, 503, 609) contre la pièce (201, 403, 501, 600) est ainsi formé que le compensateur de déformation (207, 209, 503, 609) est disposé à distance de la pièce (201, 403, 501, 600) et dans lequel le compensateur de déformation (207, 209, 503, 609) est ainsi disposé contre la pièce (201, 403, 501, 600) que le mouvement propre de la pièce (201, 403, 501, 600) est bloqué au moins en direction d'un axe d'abscisse horizontal par rapport au substrat.

2. Procédé de fabrication (100) selon la revendication 1, **caractérisé en ce que** dans le cas de la liaison par complémentarité de forme sans être par liaison de matière mentionnée, une première extrémité du compensateur de déformation (207, 209, 503, 609) est disposée par complémentarité de forme contre la pièce (201, 403, 501, 600).

3. Procédé de fabrication (100) selon la revendication 2, **caractérisé en ce que** une autre extrémité du compensateur de déformation (207, 209, 503, 609) est reliée à la pièce (201, 403, 501, 600) et/ou au substrat, de telle manière que lors du mouvement propre de la pièce (201, 403, 501, 600), des forces agissant sur le compensateur de déformation (207, 209, 503, 609) sont dérivées au moins partiellement dans le substrat et/ou dans la pièce (201, 403, 501, 600) par le compensateur de déformation (207, 209, 503, 609).

4. Procédé de fabrication (100) selon l'une des revendications précédentes, **caractérisé en ce qu'**au moyen du compensateur de déformation (207, 209, 503, 609), le mouvement propre de la pièce (201, 403, 501, 600) est bloqué dans une zone qui est sélectionnée parmi la liste suivante de zones : angle autoporté, surplomb (505), canal et/ou zone d'appui dont l'angle par rapport au substrat est plus petit qu'un angle limite prédéfini et/ou une zone d'appui dont l'angle par rapport à une autre zone est plus petit que l'angle limite prédéfini.

5. Procédé de fabrication (100) selon l'une des revendications précédentes, **caractérisé en ce que** le compensateur de déformation (207, 209, 503, 609) est mis en couche conjointement avec la pièce (201, 403, 501, 600) pendant le procédé de fabrication additive.

6. Procédé de fabrication (100) selon l'une des revendications 1-4, **caractérisé en ce que** le compensateur de déformation (207, 209, 503, 609) est disposé contre la pièce (201, 403, 501, 600) en tant qu'élément préfabriqué pendant le procédé de fabrication additive ou après le procédé de fabrication additive.

7. Procédé de fabrication (100) selon l'une des revendications précédentes, **caractérisé en ce que** le compensateur de déformation (207, 209, 503, 609) est disposé contre la pièce (201, 403, 501, 600) avec un écart en hauteur prédéfini,
dans lequel l'écart en hauteur est plus petit qu'une distance de laquelle une zone de la pièce (201, 403, 501, 600) attribuée au compensateur de déformation (207, 209, 503, 609) se déplace en raison du mouvement propre.

8. Procédé de fabrication (100) selon l'une des revendications précédentes, **caractérisé en ce qu'**une poudre est placée entre le compensateur de déformation (207, 209, 503, 609) et la pièce (201, 403, 501, 600).

9. Système de pièce (200, 500),
dans lequel le système de composant (200, 500) comprend :
- une pièce (201, 403, 501, 600) fabriquée dans un procédé de fabrication additive, et
- un compensateur de déformation (207, 209, 503, 609) ,
dans lequel
le compensateur de déformation (207, 209, 503, 609) est disposé séparable contre la pièce (201, 403, 501, 600) pour bloquer un mouvement propre de la pièce (201, 403, 501, 600) se produisant du fait d'une déformation thermique, dans lequel le compensateur de déformation (207, 209, 503, 609) est lié par complémentarité de forme sans être par liaison de matière avec la pièce (201, 403, 501, 600) et/ou le compensateur de déformation (207, 209, 503, 609) contre la pièce (201, 403, 501, 600) est ainsi formé que le compensateur de déformation (207, 209, 503, 609) est disposé à distance de la pièce (201, 403, 501, 600) et dans lequel le compensateur de déformation (207, 209, 503, 609) est ainsi disposé contre la pièce (201, 403, 501, 600) que le mouvement propre de la pièce (201, 403, 501, 600) est bloqué au moins en direction d'un axe d'abscisse horizontal par rapport au substrat.

10. Procédé implémenté sur ordinateur (300) pour fabriquer une pièce (201, 403, 501, 600) dans un procédé de fabrication additive,
dans lequel le procédé (300) comprend :
- une première étape de production (301) dans laquelle des instructions de pièce pour la fabrication de la pièce (201, 403, 501, 600) sont produites sur un substrat au moyen d'un dispositif de fabrication additive,
dans lequel le procédé (300) comprend en outre :
- une deuxième étape de production (303) dans laquelle des instructions de compensateur pour fabriquer un compensateur de déformation (207, 209, 503, 609) au moyen du procédé de fabrication additive sont produites,
dans lequel les instructions de compensateur comprennent que le compensateur de déformation (207, 209, 503, 609) est disposé séparable contre la pièce (201, 403, 501, 600) pour bloquer un mouvement propre de la pièce (201, 403, 501, 600) se produisant du fait d'une déformation thermique, dans lequel l'agencement séparable du compensateur de déformation (207, 209, 503, 609) contre la pièce (201, 403, 501, 600) comprend une liaison par complémentarité de forme sans être par liaison de matière et/ou l'agencement séparable du compensateur de déformation (207, 209, 503, 609) contre la pièce (201, 403, 501, 600) est ainsi formé que le compensateur de déformation (207, 209, 503, 609) est disposé à distance de la pièce (201, 403, 501, 600) et dans lequel le compensateur de déformation (207, 209, 503, 609) est ainsi disposé contre la pièce (201, 403, 501, 600) que le mouvement propre de la pièce (201, 403, 501, 600) est bloqué au moins en direction d'un axe d'abscisse horizontal par rapport au substrat, et
- une étape de transmission (305) dans laquelle les instructions de pièce et les instructions de compensateur sont transmises au dispositif de fabrication additive.

11. Procédé (300) selon la revendication 10, dans lequel la deuxième étape de fabrication comprend qu'un modèle de la pièce (201, 403, 501, 600) apparaît sur un affichage et dans le modèle des zones sont marquées dont le mouvement propre se produisant du fait de la déformation thermique peut être bloqué par un compensateur de déformation (207, 209, 503, 609), dans lequel les zones sont sélectionnées parmi la liste suivante de zones : angle autoporté, surplomb (505), canal et/ou zone d'appui dont l'angle par rapport au substrat est plus petit qu'un angle limite prédéfini et/ou des zones dont l'angle par rapport à une autre zone est plus petit que l'angle limite prédéfini.
